(19) Europäisches Patentamt / European Patent Office / Office européen des brevets

(11) **EP 3 311 043 B1**

(12) **EUROPÄISCHE PATENTSCHRIFT**

(45) Veröffentlichungstag und Bekanntmachung des Hinweises auf die Patenterteilung:
**26.05.2021   Patentblatt 2021/21**

(21) Anmeldenummer: **16728287.0**

(22) Anmeldetag: **07.06.2016**

(51) Int Cl.:
*F02N 15/08* (2006.01)      *F02N 11/04* (2006.01)
*F16H 7/08* (2006.01)        *F16H 7/12* (2006.01)
*F02B 67/06* (2006.01)       *F02N 11/10* (2006.01)
*G01M 13/023* (2019.01)

(86) Internationale Anmeldenummer:
**PCT/EP2016/062867**

(87) Internationale Veröffentlichungsnummer:
**WO 2016/202638 (22.12.2016 Gazette 2016/51)**

(54) **VERFAHREN ZUM BETREIBEN EINES RIEMENGETRIEBENEN STARTERGENERATORS**

METHOD FOR OPERATING A BELT-DRIVEN STARTER GENERATOR

PROCÉDÉ POUR FAIRE FONCTIONNER UN ALTERNATEUR-DÉMARREUR ENTRAÎNÉ PAR COURROIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2015   DE 102015211251**

(43) Veröffentlichungstag der Anmeldung:
**25.04.2018   Patentblatt 2018/17**

(73) Patentinhaber: **SEG Automotive Germany GmbH**
**70499 Stuttgart (DE)**

(72) Erfinder:
• **TRZEBIATOWSKI, Tobias**
**70569 Stuttgart (DE)**

• **KLEIN, Benjamin**
**74321 Bietigheim-Bissingen (DE)**

(74) Vertreter: **Steinbauer, Florian et al**
**Dehns Germany**
**Theresienstraße 6-8**
**80333 München (DE)**

(56) Entgegenhaltungen:
WO-A1-2007/000449      DE-A1-102015 208 349
FR-A1- 2 839 119        FR-A1- 2 848 631
FR-A1- 2 961 573        FR-A1- 2 996 618
JP-A- 2004 162 593      US-A1- 2012 158 226
US-A1- 2013 131 899     US-A1- 2013 138 280

**Beschreibung**

Die vorliegende Erfindung betrifft ein Verfahren zum Betreiben eines riemengetriebenen Startergenerators einer Brennkraftmaschine sowie eine Recheneinheit und ein Computerprogramm zu dessen Durchführung.

Stand der Technik

Elektrische Maschinen können in Kraftfahrzeugen als sog. Startergeneratoren eingesetzt werden, um einerseits die Brennkraftmaschine im Motorbetrieb der elektrischen Maschine zu starten und andererseits Strom für das Bordnetz und zum Laden der Kraftfahrzeugbatterie im Generatorbetrieb der elektrischen Maschine zu erzeugen. Derartige elektrische Maschinen können über einen Riemen mit der Brennkraftmaschine bzw. der Kurbelwelle verbunden sein, beispielsweise über den Keilrippenriemen der Brennkraftmaschine (sog. riemengetriebene Startergeneratoren, RSG).

Spezielle Eigenschaften des Riemens, wie dessen Länge, sind zumeist präzise an das System aus Startergenerator, Brennkraftmaschine und gegebenenfalls weiteren mit dem Riemen verbundenen Komponenten, wie Ventilatoren oder Kühlmittelpumpen, angepasst. Verschleiß und Längung des Riemens können zu einer Funktionseinschränkung des Systems führen, beispielsweise zu einer sinkenden Vorspannung und damit zu sinkenden übertragbarem Drehmoment.

Aus der DE 101 12 568 A1 ist ein Verfahren zur Erkennung von Schlupf im Antrieb von Startergenerator-Systemen bekannt. Schlupf wird dabei an einer Vergleichsstufe erkannt, welcher drehzahlabhängige Eingangsgrößen zugeführt werden, insbesondere eine Drehzahl eines Drehstrom-Generators und eine Kurbelwellendrehzahl.

Weitere alternative Diagnosen zur Erkennung einer strukturellen Veränderung des Riemens eines Startergenerators sind aus dem Stand der Technik bekannt: WO2007000449 A1, FR2848631 A1, US2013131899 A1, JP2004162593 A, FR2996618 A1, FR2961573 A1 und FR2839119 A1.

Die Patentanmeldung DE102015208349 A1, die nicht zum Stand der Technik gehört, zeigt übrigens die Diagnose der Erfindung.

Offenbarung der Erfindung

Erfindungsgemäß werden ein Verfahren zum Betreiben eines riemengetriebenen Startergenerators einer Brennkraftmaschine sowie eine Recheneinheit und ein Computerprogramm zu dessen Durchführung mit den Merkmalen der unabhängigen Patentansprüche vorgeschlagen.

Das Verfahren bedient sich der Maßnahme, ein Zeitintervall zwischen einem Beginn einer Drehbewegung des riemengetriebenen Startergenerators (also genau gesprochen seines Rotors) und einem Beginn einer Drehbewegung der Brennkraftmaschine (also genau gesprochen ihrer Kurbelwelle) zu bestimmen und aus einem Vergleich dieses Zeitintervalls mit einem Referenzwert auf eine strukturelle Veränderung des Riemens des riemengetriebenen Startergenerators, insbesondere Riemenlängung und/oder Verschleiß, zu schließen. Eine strukturelle Riemenveränderung, wie z.B. eine Längung (insbesondere durch Alterung des Zugcordes) oder Verschleiß (wie z.B. Verschleiß der Riemenoberfläche, insbesondere der Rippen, wodurch der Riemen für den Riementrieb länger wird, oder Veränderung des E-Moduls), wirkt sich auf die gemessene Zeitdauer aus, so dass eine Veränderung der Zeitdauer auf eine strukturelle Riemenveränderung schließen lässt.

In Abhängigkeit von der auf diese Weise erkannten strukturellen Veränderung des Riemens wird ein Drehmoment des riemengetriebenen Startergenerators begrenzt bzw. ein maximal zulässiges Drehmoment des riemengetriebenen Startergenerators wird reduziert. Alternativ oder zusätzlich kann auch ein Drehmoment einer mit dem Riemen verbundenen Komponente, beispielsweise eines Ventilators oder einer Kühlmittelpumpe, begrenzt (z.B. auch auf Null) werden. Insbesondere werden die Drehmomente aller am Riementrieb beteiligter Komponenten im selben Maße begrenzt. Die Reduktion kann insbesondere als Funktion (z.B. eine stetige Funktion, oder eine Treppenfunktion) eines Ausmaßes der strukturellen Veränderung des Riemens vorgegeben sein, die Begrenzung kann auch auf einen vorbestimmten reduzierten Wert erfolgen.

Vorteile der Erfindung

Es wird eine Möglichkeit bereitgestellt, um eine über ein zulässiges Maß hinausgehende strukturelle Veränderung des Riemens frühzeitig erkennen zu können. Durch die Begrenzung des Drehmoments bei erkannter struktureller Veränderung wird verhindert, dass ein bereits verschleißbehafteter Riemen überstrapaziert wird und dass Verschleiß bzw. Längung des Riemens noch weiter beschleunigt werden. Schädigungen oder gar ein Reißen des Riemens und ein Ausfall des Riementriebs können somit vermieden werden. Die Lebensdauer des Riemens kann erhöht werden, so dass insbesondere ein rechtzeitiger Austausch möglich wird.

Es ist nicht nötig, den Riemen in fest vorgegebenen Zeitabständen oder nach einer fest vorgegebenen Anzahl von Betriebsstunden auszuwechseln. Somit kann verhindert werden, dass Riemen ausgetauscht werden, welche nur wenig Längung/Verschleiß aufweisen und noch verwendet werden können, ohne dass ein Sicherheitsrisiko besteht. Stattdessen kann der Riemen jeweils dann ausgewechselt werden, wenn es aufgrund der erkannten Riemenveränderung zweckmäßig ist. Kosten können reduziert und Material kann eingespart werden. Auch ein Zeitaufwand für unnötige Wartungen kann verhindert werden. Darüber hinaus kann das Verfahren mit üblicherweise ohnehin vorhandenen Mitteln umgesetzt werden. Zusätzliche Sensoren o.ä. sind nicht nötig.

Das Zeitintervall zwischen dem Beginn der Drehbewegung des riemengetriebenen Startergenerators und dem Beginn der Drehbewegung der Brennkraftmaschine kann vorteilhaft zur Überprüfung der Riemenveränderung herangezogen werden. Dies liegt daran, dass ausgehend von einer Ruhelage, wenn kein Drehmoment im Riementrieb anliegt und Lasttrum und Leertrum dieselbe Spannung aufweisen, nach Beginn der Drehbewegung des Startergenerators zunächst das Lasttrum gekürzt und das Leertrum verlängert wird, bis die Brennkraftmaschine losbricht. Die Zeit, die für das Verkürzen und Verlängern benötigt wird, hängt von der Riemenstruktur, insbesondere von der Riemenlänge und vom Riemenzustand, ab.

Der Referenzwert stellt insbesondere einen Wert des Zeitintervalls für einen neuen, ungelängten und unverschlissenen Referenz-Riemen dar.

Vorzugsweise wird eine über ein zulässiges Maß hinausgehende strukturelle Riemenveränderung erkannt, wenn ein Unterschied zwischen dem bestimmten Zeitintervall und dem Referenzwert einen Schwellwert erreicht oder überschreitet. Je nachdem wie groß dieser Unterschied ist, kann insbesondere auf ein Ausmaß der Riemenveränderung rückgeschlossen werden. Die über ein zulässiges Maß hinausgehende strukturelle Riemenveränderung führt vorzugsweise dazu, dass im Rahmen der Erfindung die Belastung des Riemens eingeschränkt bzw. dass das Drehmoment des riemengetriebenen Startergenerators und/oder der Komponente des Riementriebs begrenzt wird.

Vorteilhafterweise wird die mit dem Riemen verbundene Komponente in Abhängigkeit von der strukturellen Veränderung des Riemens deaktiviert. Insbesondere bei einem stark verschlissenen Riemen kann somit eine zusätzliche Belastung des Riemens durch die entsprechende Komponente auf ein Minimum reduziert werden

Das Drehmoment des riemengetriebenen Startergenerators bzw. der Komponente des Riementriebs wird begrenzt, wenn vorzugsweise die strukturelle Veränderung des Riemens und/oder wenn vorzugsweise der Unterschied zwischen dem bestimmten Zeitintervall und dem Referenzwert jeweils einen Schwellwert erreichen. Je nach Ausmaß der Riemenveränderung bzw. je nachdem, in welchem Maß das Zeitintervall den Schwellwert überschreitet, kann das jeweilige Drehmoment unterschiedlich stark begrenzt werden.

Vorteilhafterweise wird das Zeitintervall bestimmt, wenn die Brennkraftmaschine mittels des Startergenerators gestartet (also angelassen) wird. Das Zeitintervall wird insbesondere bei jedem Starten der Brennkraftmaschine bestimmt. Somit kann insbesondere ein Trend bestimmt werden, wie sich das Zeitintervall über die Zeit verändert. Sobald der Startergenerator in Drehbewegung versetzt ist, wird über den Riemen Drehmoment an die Brennkraftmaschine übertragen. Sobald dieses groß genug ist, insbesondere wenn es ein sogenanntes Losbrechmoment der Brennkraftmaschine erreicht bzw. überschreitet, dreht die Brennkraftmaschine los. Insbesondere wird somit bei jedem Starten der Brennkraftmaschine in Abhängigkeit von der aktuellen strukturellen Veränderung bestimmt, ob das Drehmoment des riemengetriebenen Startergenerators begrenzt werden soll oder nicht.

Alternativ kann das Zeitintervall (insbesondere nur) dann beim Starten der Brennkraftmaschine bestimmt werden, wenn die Brennkraftmaschine vor diesem jeweiligen Starten über einen bestimmten Zeitraum nicht betrieben wurde, um sicherzustellen, dass sich Riemen und Riemenspanner in ihrer jeweiligen Ruhelage befinden. Somit wird sichergestellt, dass präzise auf eine strukturelle Veränderung des Riemens geschlossen werden kann und dass das Drehmoment nicht fälschlicherweise begrenzt wird.

Vorzugsweise wird eine Vielzahl von Zeitintervallen bestimmt. Insbesondere wird dafür über eine Vielzahl von Starts der Brennkraftmaschine jeweils ein Zeitintervall bestimmt. Aus der Vielzahl von Zeitintervallen wird insbesondere auf eine Riemenveränderung rückgeschlossen. Das Zeitintervall kann beispielsweise aufgrund von Umgebungsbedingungen wie unterschiedlichen Temperaturen, Nässe, Reif von Messung zu Messung streuen. Durch Bestimmen und Auswerten der Vielzahl von Zeitintervallen kann insbesondere verhindert werden, dass durch kurzzeitiges Erreichen des Schwellwerts aufgrund ungünstiger Umgebungsbedingungen fälschlicherweise auf eine Riemenveränderung rückgeschlossen wird. Nur wenn der Schwellwert dauerhaft erreicht wird, wird auf eine Riemenveränderung rückgeschlossen.

Die Vielzahl von Zeitintervallen wird bevorzugt statistisch ausgewertet und mit dem Referenzwert verglichen. Vorteilhafterweise wird ein statistischer Mittelwert aus der Vielzahl von Zeitintervallen bestimmt und mit dem Referenzwert verglichen. Alternativ oder zusätzlich wird vorzugsweise eine Zeitreihenanalyse durchgeführt. Insbesondere kann im Zuge dessen ein Trend bzw. eine Trendlinie des Zeitintervalls bestimmt werden.

Vorteilhafterweise wird bei Beginn der Drehbewegung des riemengetriebenen Startergenerators ein erster Zeitstempel bestimmt oder empfangen. Bei Beginn der Drehbewegung der Brennkraftmaschine wird vorzugsweise ein zweiter Zeitstempel bestimmt oder empfangen. Insbesondere wird der erste bzw. zweite Zeitstempel von dem jeweiligen Steuergerät des Startergenerators bzw. der Brennkraftmaschine bestimmt.

Das Zeitintervall wird aus dem ersten Zeitstempel und dem zweitem Zeitstempel bestimmt. Diese Bestimmung des Zeitintervalls und die Analyse desselben kann in dem Steuergerät des Startergenerators und/oder in dem Steuergerät der Brennkraftmaschine und/oder in einem weiteren dritten Steuergerät durchgeführt werden. Je nachdem in welchem Steuergerät die Bestimmung durchgeführt wird, werden die entsprechenden Zeitstempel von den übrigen Steuergeräten an dieses Steuergerät versendet und von diesem Steuergerät empfangen.

Die Bestimmung, ob das Drehmoment des riemengetriebenen Startergenerators bzw. der Komponente des Riementriebs in Abhängigkeit von der strukturellen Veränderung begrenzt wird oder nicht, kann in dem Steuergerät des Startergenerators und/oder der Brennkraftmaschine und/oder in einem weiteren dritten Steuergerät durchgeführt werden. Vorzugsweise wird der riemengetriebene Startergenerator benachrichtigt, wenn dessen Drehmoment begrenzt wird. Bevorzugt werden auch weitere am Riementrieb beteiligte Komponenten über diese Begrenzung benachrichtigt.

Die Steuergeräte stehen insbesondere über einen Feldbus, beispielsweise einen CAN-Bus, miteinander in datenübertragender Verbindung. Die jeweiligen Zeitstempel können insbesondere synchron zu dem Takt des Feldbuses bestimmt und versendet werden (z.B. synchron zu einem 1 MHz-Bustakt, was einem Inkrement von 1 µs entspricht). Insbesondere können die Zeitstempel der Feldbus-Kommunikation verwendet werden.

Vorzugsweise wird ein Fehlereintrag in einem Fehlerspeicher erstellt, wenn eine Riemenveränderung erkannt wird. Alternativ oder zusätzlich kann bevorzugt eine visuelle und/oder akustische Benachrichtigung ausgegeben werden, beispielsweise kann eine Warnleuchte in einem Armaturenbereich des Fahrzeugs aktiviert werden. Somit kann ein Fahrer des Fahrzeugs darauf hingewiesen werden, dass der Riemen gewechselt werden soll.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1      zeigt schematisch einen Riementrieb eines Kraftfahrzeugs mit Brennkraftmaschine und riemengetriebenem Startergenerator, der dazu eingerichtet ist, eine bevorzugte Ausführungsform eines erfindungsgemäßen Verfahrens durchzuführen.

Figur 2      zeigt schematisch einen Riementrieb eines Kraftfahrzeugs mit Brennkraftmaschine und riemengetriebenem Startergenerator, der in einem motorischen Betrieb und in einem generatorischen Betrieb betrieben wird.

Figur 3      zeigt schematisch eine bevorzugte Ausführungsform eines erfindungsgemäßen Verfahrens als ein Blockdiagramm.

Figur 4      zeigt schematisch ein Diagramm von Zeitintervallen aufgetragen gegen Startvorgänge einer Brennkraftmaschine, welches im Zuge einer bevorzugten Ausführungsform eines erfindungsgemäßen Verfahrens bestimmt werden kann.

Figur 5      zeigt schematisch einen Riementrieb eines Kraftfahrzeugs mit Brennkraftmaschine und riemengetriebenem Startergenerator beim Starten der Brennkraftmaschine mittels des riemengetriebenen Startergenerators.

Ausführungsform(en) der Erfindung

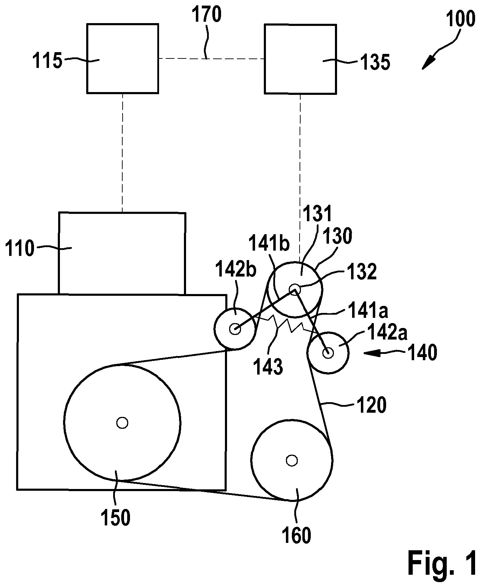

In Figur 1 ist ein Riementrieb eines Kraftfahrzeugs schematisch dargestellt und mit 100 bezeichnet.

Eine Brennkraftmaschine 110 des Kraftfahrzeugs weist eine Kurbelwelle auf, die drehfest mit einem Kurbelwellen-Antriebsrad 150 verbunden ist. Das Kurbelwellen-Antriebsrad 150 ist beispielsweise als Riemenscheibe ausgebildet.

Über einen Riemen 120, beispielsweise über einen Keilrippenriemen, ist die Brennkraftmaschine 110 mit einem riemengetriebenen Startergenerator 130 Drehmoment übertragend verbunden. Der Riemen 120 greift insbesondere kraft- und/oder formschlüssig in das Kurbelwellen-Antriebsrad 150 und in ein Antriebsrad 131 des Startergenerators 130 ein. Das Antriebsrad 131 ist drehfest mit einem Rotor des Startergenerators 130 verbunden. Die Brennkraftmaschine 110 kann über den Riemen 120 mit weiteren Komponenten 160, wie Ventilatoren oder Kühlmittelpumpen, verbunden sein.

Ein erstes Steuergerät 115 ist insbesondere zur Steuerung der Brennkraftmaschine 110 eingerichtet, ein zweites Steuergerät 135 ist insbesondere zur Steuerung des Startergenerators 130 eingerichtet. Die Steuergeräte 115 und 135 stehen insbesondere miteinander über einen Feldbus 170, beispielsweise über einen CAN-Bus, in datenübertragender Verbindung. Insbesondere ist das zweite Steuergerät 135 dazu eingerichtet, eine bevorzugte Ausführungsform des erfindungsgemäßen Verfahrens durchzuführen. Es sei darauf hingewiesen, dass alternativ oder zusätzlich auch das erste Steuergerät 115 dazu eingerichtet sein kann, eine bevorzugte Ausführungsform des erfindungsgemäßen Verfahrens durchzu-

führen.

Bekanntermaßen kann ein Startergenerator sowohl motorisch als auch generatorisch betrieben werden. Der Riemen muss daher in der Lage sein, Drehmoment in beide Richtungen zu übertragen. Der Riemen ist daher beispielsweise als ein Keilrippenriemen ausgebildet. Je nachdem, ob der Startergenerator 130 motorisch oder generatorisch betrieben wird, wechseln Lasttrum und Leertrum des Riemens 120. Weiterhin ist ein entsprechender Riemenspanner 140 vorgesehen, um den Riemen 120 vorzuspannen. Der Riemenspanner 140 kann beispielsweise als ein Pendelriemenspanner ausgebildet sein, der beispielsweise zwei Pendelarme 141a und 141b umfasst, welche insbesondere über einen Federmechanismus 143 miteinander verbunden sind. Drehachsen dieser beiden Pendelarme 141a und 141b sind beispielsweise kollinear zu einer Drehachse 132 des Antriebsrads 131 des Startergenerators 130. Andere Ausführungsformen von Pendelriemenspannern oder Zwei-Arm-Spannern mit nicht zur Drehachse des Startergenerators kollinearen Achsen sind ebenfalls möglich. Diese Drehachse 132 des Antriebsrads 131 stellt somit gleichzeitig auch eine Drehachse des Pendelriemenspanners 120 dar. Jeder Pendelarm 141a bzw. 141b ist jeweils mit einer Spannrolle 142a bzw. 142b verbunden.

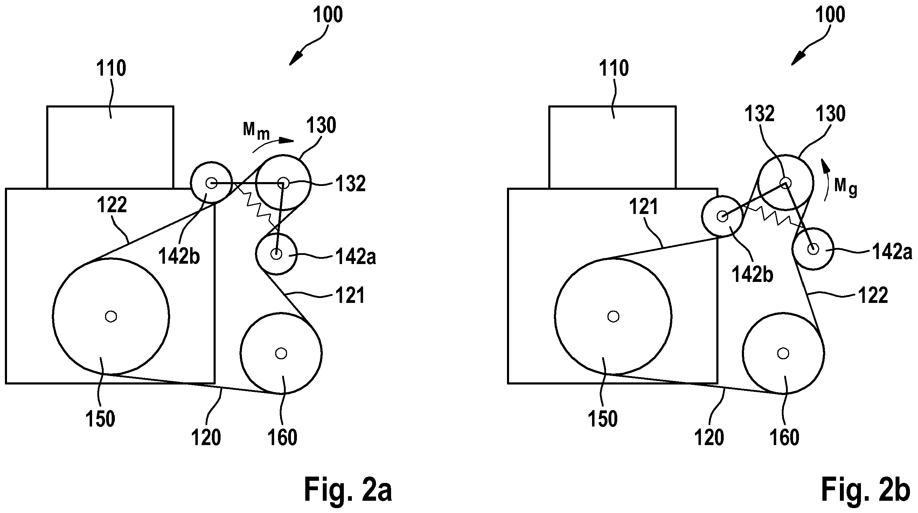

In Figur 2 ist der Riementrieb 100 analog zu Figur 1 dargestellt. In Figur 2a ist der Startergenerator 130 im motorischen Betrieb dargestellt, in Figur 2b im generatorischen Betrieb.

Beispielsweise dreht sich das Antriebsrad 131 des Startergenerators 130 im motorischen Betrieb gemäß Figur 2a mit einer Drehgeschwindigkeit $\omega$ um die Drehachse 132. Drehmoment wird in diesem Fall über den Riemen 120 vom Startergenerator 130 zur Brennkraftmaschine 110 übertragen. Vom Startergenerator 130 wird ein antreibendes Moment $M_m$ erzeugt. Ein Riemenabschnitt des Riemens 120 zwischen dem Antriebsrad 131 und dem Kurbelwellen-Antriebsrad 150 bildet in diesem Fall das Lasttrum 122, ein Riemenabschnitt zwischen dem Antriebsrad 131 und der weiteren Komponente 160 bildet das Leertrum 121.

Im generatorischen Betrieb gemäß Figur 2b dreht sich das Antriebsrad 131 beispielsweise mit einer Drehgeschwindigkeit $\omega$. Drehmoment wird in diesem Fall über den Riemen 120 von der Brennkraftmaschine 110 zum Startergenerator 130 übertragen. Vom Startergenerator 130 wird nun kein antreibendes Moment $M_m$, sondern ein bremsendes Moment $M_g$ erzeugt. Die Positionen von Lasttrum 122 und Leertrum 121 sind im Vergleich zum motorischen Betrieb vertauscht.

Je nachdem welches Drehmoment vom Startergenerator 130 erzeugt wird, verändern sich die Lage des Pendelriemenspanners 140 und des Riemens 120. Die Arme des Pendelriemenspanners 140 drehen sich dabei um die Drehachse 132 in Richtung des Lasttrums 122.

Spezielle Eigenschaften des Riemens 120, insbesondere dessen Länge, sind präzise an das System aus Brennkraftmaschine 110, Startergenerator 130 und den weiteren Komponenten 160 angepasst. Verschleiß und Längung des Riemens können zu einer Funktionseinschränkung des Riementriebs 100 führen, beispielsweise zu einer sinkenden Vorspannung und damit zu sinkenden übertragbarem Drehmoment.

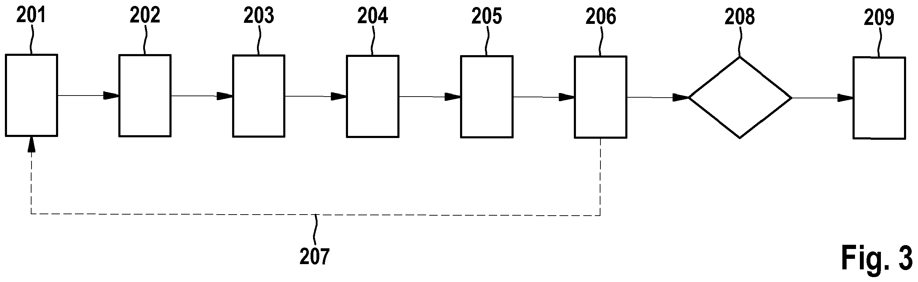

Um frühzeitig eine über ein zulässiges Maß hinausgehende strukturelle Veränderung des Riemens 120 zu erkennen, um die Lebensdauer des Riemens 120 zu verlängern, um ein Überstrapazieren eines verschleißbehafteten Riemens 120 zu verhindern und um ein Reißen eines verschleißbehafteten Riemens 120 zu verhindern, ist beispielsweise das Steuergerät 135 dazu eingerichtet, eine bevorzugte Ausführungsform eines erfindungsgemäßen Verfahrens durchzuführen, welche in Figur 3 schematisch als ein Blockdiagramm dargestellt ist.

In Schritt 201 ist der Riementrieb 100 in Ruhe, weder Brennkraftmaschine 110 noch Startergenerator 130 werden betrieben. Der Pendelriemenspanner 140 ist in diesem Fall nicht ausgelenkt und befindet sich in seiner Ruhelage bzw. Mittellage. Ebenso befindet sich der Riemen 120 in seiner Ruhelage und ist nicht ausgelenkt.

Die Brennkraftmaschine 110 soll mittels des Startergenerators 130 gestartet werden, der Startergenerator 130 wird zu diesem Zweck in dem motorischen Betrieb betrieben. In Schritt 202 wird der Startergenerator 130 in Drehbewegung versetzt.

Sobald von dem zweiten Steuergerät 135 dieser Beginn der Drehbewegung des Startergenerators 130 detektiert wird, wird von dem zweiten Steuergerät 135 gemäß Schritt 203 ein erster Zeitstempel bestimmt.

Durch das erzeugte Drehmoment in dem Startergenerator 130 werden der Pendelriemenspanner 140 und der Riemen 120 aus ihrer jeweiligen Ruhelage ausgelenkt. Das Lasttrum wird verkürzt und das Leertrum wird verlängert. Sobald das Lasttrum ausreichend stark gespannt ist, wird in Schritt 204 auch die Brennkraftmaschine 110 in Drehbewegung versetzt. Dieser Beginn der Drehbewegung wird üblicherweise von dem ersten Steuergerät 115 detektiert, beispielsweise durch Überwachung eines Kurbelwellengeberrads. Das erste Steuergerät 115 erzeugt gemäß Schritt 205 einen zweiten Zeitstempel und teilt diesen dem zweiten Steuergerät 135 über den CAN-Bus mit. Anhand des ersten und des zweiten Zeitstempels wird in dem zweiten Steuergerät 135 gemäß Schritt 206 das Zeitintervall zwischen Beginn der Drehbewegung des Startergenerators 130 und der Brennkraftmaschine 110 bestimmt.

Diese Bestimmung des Zeitintervalls wird insbesondere bei jedem Starten der Brennkraftmaschine 110 mittels des Startergenerators 130 wiederholt, angedeutet durch Bezugszeichen 207. Somit wird eine Vielzahl von Zeitintervallen bestimmt, welche beispielsweise in dem zweiten Steuergerät 135 hinterlegt werden können.

Mit jedem neu bestimmten Zeitintervall werden die Zeitintervalle ausgewertet und mit einem Referenzwert verglichen. Zu diesem Zweck wird in Schritt 208 eine statistische Auswertung der hinterlegten Vielzahl von Zeitintervallen durchgeführt. Insbesondere wird eine Zeitreihenanalyse durchgeführt. Mittels der Zeitreihenanalyse kann ein Trend des Zeitintervalls festgestellt werden.

Wenn die Auswertung ergibt, dass über eine bestimmte Anzahl von Startvorgängen der Brennkraftmaschine 110 (beispielsweise über mindestens fünf Startvorgängen) jeweils ein Unterschied zwischen dem jeweiligen bestimmten Zeitintervall und dem Referenzwert einen Schwellwert erreicht, wird eine über ein zulässiges Maß hinausgehende strukturelle Veränderung des Riemens 120 erkannt.

Wenn erkannt wird, dass der Riemen 120 strukturell verändert ist, wird in Schritt 209 in Abhängigkeit von der strukturellen Veränderung des Riemens 120 das Drehmoment des Startergenerators 130 sowie der weiteren Komponenten 160 reduziert.

Je nachdem in welchem Maße das bestimmte Zeitintervall den Schwellwert jeweils überschreitet, wird ein zulässiger Maximalwert des Drehmoments unterschiedlich stark begrenzt. Je größer der Unterschied zwischen dem jeweiligen bestimmten Zeitintervall und dem Referenzwert, desto stärker wird das Drehmoment des Startergenerators 130 und der weiteren Komponenten 160 begrenzt bzw. desto geringer wird der zulässige Maximalwert des Drehmoments gewählt.

Das Drehmoment des RSG kann beispielsweise in Stufen von 5 Nm begrenzt werden. Alternativ oder zusätzlich können auch aktive Komponente des Riementriebs bei verschiedenen Betriebsbedingungen (z.B. Motorstart) abgeschaltet werden. Dadurch ergibt sich zwar eine Funktionseinschränkung der entsprechenden Komponenten im Riementrieb (z.B. geringfügig verlängerte Motorstartzeit), aber es kommt zu keinem unerwarteten Funktionsausfall (z.B. Riemenabriss).

Weiterhin kann gemäß Schritt 209 beispielsweise eine Warnleuchte in einem Armaturenbereich des Fahrzeugs aktiviert und/oder ein Fehlereintrag in einem Fehlerspeicher erstellt werden.

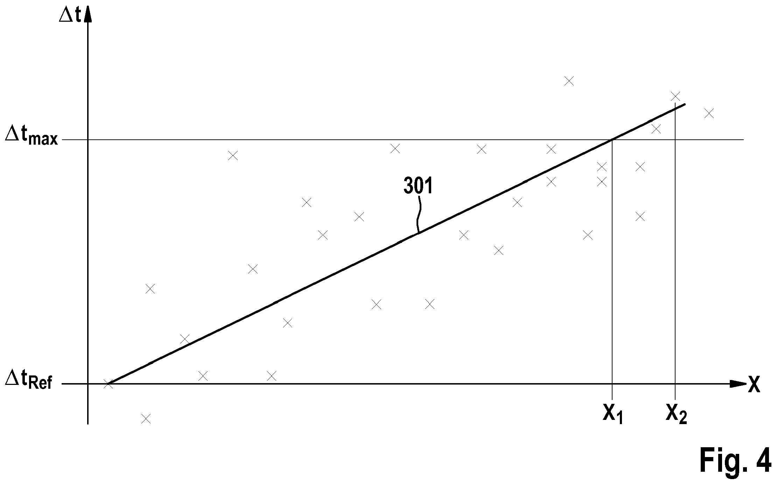

In Figur 4 ist ein Diagramm schematisch dargestellt, welches im Zuge der statistischen Auswertung der Zeitintervalle bestimmt werden kann. Dabei sind die einzelnen Zeitintervalle $\Delta t$ jeweils gegen den zugehörigen Startvorgang X aufgetragen, bei welchem sie jeweils bestimmt wurden. Durch die Zeitreihenanalyse wird ein Trend bzw. eine Trendkurve 301 der bestimmten Zeitintervalle als eine lineare Funktion bestimmt.

Überschreitet der Unterschied zwischen dem jeweiligen bestimmten Zeitintervall $\Delta t$ und dem Referenzwert $\Delta t_{Ref}$ den Schwellwert, entspricht dies insbesondere einem Überschreiten eines zulässigen Maximalwerts $\Delta t_{max}$ der bestimmten Trendkurve 301. Sobald die Trendkurve 301 den Maximalwerts $\Delta t_{max}$ über eine bestimmte Anzahl von Startvorgängen überschreitet (beispielsweise zwischen den Startvorgängen $X_1$ und $X_2$), wird eine über ein zulässiges Maß hinausgehende strukturelle Veränderung des Riemens erkannt.

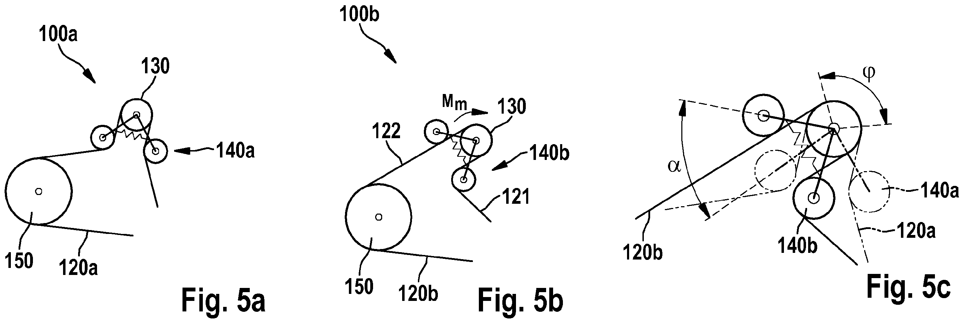

Im Folgenden wird ein mathematischer Zusammenhang zwischen dem Zeitintervall und geometrischen Größen des Riementrieb anhand von Figur 5 erklärt, in der ein Teil des Riementriebs analog zu den Figuren 1 und 2 beim Starten der Brennkraftmaschine 110 mittels des Startergenerators 130 schematisch dargestellt ist.

In Figur 5a ist der in Ruhe befindliche Riementrieb schematisch dargestellt und mit 100a bezeichnet. Pendelriemenspanner 140a und Riemen 120a befinden sich jeweils in ihrer Ruhelage. In Figur 5b ist der Riementrieb nach dem Zeitintervall $\Delta t$ nach Beginn der Drehbewegung des Startergenerators 130 dargestellt und mit 100b bezeichnet. Der Pendelriemenspanner 140b ist in diesem Fall ausgelenkt und Lasttrum ist ausreichend verkürzt, um die Brennkraftmaschine 110 in Drehbewegung zu versetzen.

In Figur 5c ist der Pendelriemenspanner in seiner Ruhelage (140a) und in seiner entsprechend ausgelenkten Lage (140b) dargestellt. Der ausgelenkte Pendelriemenspanner 140b ist um einen Auslenkungswinkel $\alpha$ gegenüber seiner Ruhelage 140a ausgelenkt.

Der Auslenkung des Pendelriemenspanners 140 wirkt insbesondere die Massenträgheit J des Startergenerators 130 entgegen. Das Drehmoment M des Startergenerators 130, seine Massenträgheit J und die Änderung der Drehgeschwindigkeit $\omega$ des Startergenerators 130 bzw. seines Antriebsrades 131 stehen in folgender Beziehung zueinander:

$$M = J\frac{d\omega}{dt} = J\frac{d^2\varphi}{dt^2}$$

Der zurückgelegte Drehwinkel $\varphi$ des Startergenerators 130 bzw. seines Antriebsrades 131 ergibt sich aus dieser Beziehung wie folgt:

$$\varphi = \iint \frac{M}{J}\,dt\,dt$$

Aus dieser Gleichung ergibt sich das Zeitintervall $\Delta t$ zwischen Beginn der Drehbewegung des Startergenerators 130 und der Brennkraftmaschine 110 wie folgt:

$$\Delta t = \sqrt{\frac{2J\varphi_{erf}}{M}}$$

$\varphi_{erf}$ bezeichnet den erforderlichen Drehwinkel zum Starten der Brennkraftmaschine 110. Das zum Starten der Brennkraftmaschine 110 erforderliche Losbrechmoment definiert insbesondere einen erforderlichen Auslen-

kungswinkel $\alpha_{erf}$ des Riemenspanners 140, der wiederum insbesondere proportional zu dem Drehwinkel $\varphi$ des Startergenerators 130 ist.

Ein Referenzwert für das Zeitintervall $\Delta t$ für einen neuen, unverschlissenen Riemen liegt beispielsweise im niedrigen ms-Bereich und kann beispielsweise ca. 16 ms betragen. Eine über ein zulässiges Maß hinausgehende strukturelle Veränderung des Riemens führt zu einer geringeren Vorspannung und insbesondere zu einer Änderung der Ruhelage des Pendelriemenspanners. Dadurch wird der erforderliche Auslenkungswinkel $\alpha_{erf}$ erhöht und das Zeitintervall $\Delta t$ vergrößert sich.

**Patentansprüche**

1. Verfahren zum Betreiben eines riemengetriebenen Startergenerators (130) einer Brennkraftmaschine (110),

    - wobei ein Zeitintervall ($\Delta t$) zwischen einem Beginn einer Drehbewegung des riemengetriebenen Startergenerators (130) und einem Beginn einer Drehbewegung der Brennkraftmaschine (110) bestimmt wird (206),
    - wobei das bestimmte Zeitintervall ($\Delta t$) mit einem Referenzwert ($\Delta t_{Ref}$) verglichen wird (208) und daraus auf die strukturelle Veränderung eines Riemens (120) des riemengetriebenen Startergenerators (130) geschlossen wird und
    - wobei in Abhängigkeit von der strukturellen Veränderung des Riemens (120) ein Drehmoment des riemengetriebenen Startergenerators (130) und/oder ein Drehmoment einer mit dem Riemen verbundenen Komponente begrenzt werden.

2. Verfahren nach Anspruch 1, wobei in Abhängigkeit von der strukturellen Veränderung des Riemens die mit dem Riemen verbundene Komponente deaktiviert wird.

3. Verfahren nach Anspruch 1 oder 2, wobei das Drehmoment des riemengetriebenen Startergenerators (130) und/oder der mit dem Riemen verbundenen Komponente begrenzt wird, wenn die strukturelle Veränderung des Riemens (120) einen Schwellwert erreicht.

4. Verfahren nach einem der vorstehenden Ansprüche, wobei das Drehmoment des riemengetriebenen Startergenerators (130) und/oder der mit dem Riemen verbundenen Komponente begrenzt wird, wenn ein Unterschied zwischen dem bestimmten Zeitintervall ($\Delta t$) und dem Referenzwert ($\Delta t_{Ref}$) einen Schwellwert erreicht.

5. Verfahren nach einem der vorstehenden Ansprüche, wobei das Drehmoment des riemengetriebenen Startergenerators (130) und/oder der mit dem Riemen verbundenen Komponente als Funktion eines Ausmaßes der strukturellen Veränderung des Riemens (120) begrenzt wird.

6. Verfahren nach einem der vorstehenden Ansprüche, wobei das Zeitintervall ($\Delta t$) bestimmt wird (206), wenn die Brennkraftmaschine (110) mittels des riemengetriebenen Startergenerators (130) gestartet wird.

7. Verfahren nach einem der vorstehenden Ansprüche, wobei eine Vielzahl von Zeitintervallen ($\Delta t$) bestimmt wird (207), wobei die Vielzahl von Zeitintervallen ($\Delta t$) statistisch ausgewertet wird (208) und mit dem Referenzwert verglichen wird.

8. Verfahren nach Anspruch 7, wobei im Zuge der statistischen Auswertung (208) ein statistischer Mittelwert aus der Vielzahl von Zeitintervallen ($\Delta t$) bestimmt wird und/oder eine Zeitreihenanalyse durchgeführt wird.

9. Verfahren nach einem der vorstehenden Ansprüche, wobei bei Beginn der Drehbewegung des riemengetriebenen Startergenerators (130) ein erster Zeitstempel bestimmt oder empfangen wird (203), wobei bei Beginn der Drehbewegung der Brennkraftmaschine (110) ein zweiter Zeitstempel bestimmt (205) oder empfangen wird und wobei das Zeitintervall ($\Delta t$) aus dem ersten Zeitstempel und dem zweitem Zeitstempel bestimmt wird (206).

10. Verfahren nach einem der vorstehenden Ansprüche, wobei ein Fehlereintrag in einem Fehlerspeicher erstellt wird und/oder eine visuelle und/oder akustische Benachrichtigung ausgegeben wird, wenn die strukturelle Veränderung des Riemens erkannt wird (209).

11. Recheneinheit (115), die dazu eingerichtet ist, ein Verfahren nach einem der vorstehenden Ansprüche in einer mit einem riemengetriebenen Startergenerator (130) ausgestatteten Brennkraftmaschine (110) durchzuführen, wobei die Recheneinheit dazu eingerichtet ist, das im Anspruch 1 definierte Zeitintervall zu bestimmen und das Drehmoment des riemengetriebenen Startergenerators und/oder das Drehmoment der mit dem Riemen verbundenen Komponente zu steuern.

12. Computerprogramm, das eine Recheneinheit (115) gemäß Anspruch 11 dazu veranlasst, ein Verfahren nach einem der Ansprüche 1 bis 10 durchzuführen, wenn es auf der Recheneinheit (115) ausgeführt wird.

13. Maschinenlesbares Speichermedium mit einem darauf gespeicherten Computerprogramm nach Anspruch 12.

**Claims**

1. Method for operating a belt-driven starter generator (130) of an internal combustion engine (110),

   - wherein a time interval ($\Delta t$) between a start of a rotational movement of the belt-driven starter generator (130) and a start of a rotational movement of the internal combustion engine (110) is determined (206),
   - wherein the determined time interval ($\Delta t$) is compared (208) with a reference value ($\Delta t_{Ref}$) and the structural change of a belt (120) of the belt-driven starter generator (130) is concluded thereof, and
   - wherein a rotational torque of the belt-driven starter generator (130) and/or a rotational torque of a component connected to the belt are limited as a function of the structural change of the belt (120).

2. Method according to claim 1, wherein, depending on the structural change of the belt, the component connected to the belt is deactivated.

3. Method according to claim 1 or 2, wherein the rotational torque of the belt-driven starter generator (130) and/or the component connected to the belt is limited when the structural change of the belt (120) reaches a threshold value.

4. Method according to any one of the preceding claims, wherein the rotational torque of the belt-driven starter generator (130) and/or the component connected to the belt is limited when a difference between the determined time interval ($\Delta t$) and the reference value ($\Delta t_{Ref}$) reaches a threshold value.

5. Method according to any one of the preceding claims, wherein the rotational torque of the belt-driven starter generator (130) and/or the component connected to the belt is limited as a function of an amount of structural change of the belt (120).

6. Method according to any one of the preceding claims, wherein the time interval ($\Delta t$) is determined (206) when the internal combustion engine (110) is started by means of the belt-driven starter generator (130).

7. Method according to any one of the preceding claims, wherein a plurality of time intervals ($\Delta t$) is determined (207), wherein the plurality of time intervals ($\Delta t$) is statistically evaluated (208) and compared with the reference value.

8. Method according to claim 7, wherein in the course of the statistical evaluation (208) a statistical mean value is determined from the plurality of time intervals ($\Delta t$) and/or a time series analysis is performed.

9. Method according to any one of the preceding claims, wherein a first time stamp is determined or received (203) at the start of the rotational movement of the belt-driven starter generator (130), wherein a second time stamp is determined (205) or received at the start of the rotational movement of the internal combustion engine (110), and wherein the time interval ($\Delta t$) is determined (206) from the first time stamp and the second time stamp.

10. Method according to any one of the preceding claims, wherein a fault entry is established in a fault memory and/or a visual and/or audible notification is issued when the structural change of the belt is detected (209).

11. Computational unit (115) configured to perform a method according to any one of the preceding claims in an internal combustion engine (110) equipped with a belt-driven starter generator (130), wherein the computational unit is configured to determine the time interval defined in claim 1 and to control the rotational torque of the belt-driven starter generator and/or the rotational torque of the component connected to the belt.

12. Computer program that causes a computational unit (115) according to claim 11 to perform a method according to any one of claims 1 to 10 when executed on the computational unit (115).

13. Machine-readable storage medium having a computer program stored thereon according to claim 12.

**Revendications**

1. Procédé de fonctionnement d'un générateur de démarrage (130) entraîné par courroie d'un moteur à combustion interne (110),

   - dans laquelle un intervalle de temps ($\Delta t$) entre le début d'un mouvement de rotation du générateur de démarrage (130) entraîné par courroie et le début d'un mouvement de rotation du moteur à combustion interne (110) est déterminé (206),
   - dans lequel l'intervalle de temps ($\Delta t$) déterminé étant comparé (208) à une valeur de référence ($\Delta t_{Ref}$) et le changement de structure d'une courroie (120) du générateur de démarrage (130) entraîné par courroie étant conclu à partir de là, et

- dans lequel un couple du générateur de démarrage (130) entraîné par courroie et/ou un couple d'un composant relié à la courroie sont limités en fonction de la modification structurelle de la courroie (120).

2. Procédé selon la revendication 1, dans lequel, en réponse à la modification de la structure de la courroie, le composant relié à la courroie est désactivé.

3. Procédé selon la revendication 1 ou 2, dans lequel le couple du générateur de démarreur (130) entraîné par courroie et/ou du composant relié à la courroie est limité lorsque la modification structurelle de la courroie (120) atteint une valeur seuil.

4. Procédé selon l'une des revendications précédentes, dans lequel le couple du générateur de démarreur (130) entraîné par courroie et/ou du composant relié à la courroie est limité lorsqu'une différence entre l'intervalle de temps ($\Delta t$) déterminé et la valeur de référence ($\Delta t_{Ref}$) atteint une valeur seuil.

5. Procédé selon l'une quelconque des revendications précédentes, dans lequel le couple du générateur de démarreur (130) entraîné par courroie et/ou du composant relié à la courroie est limité en fonction d'une quantité de modification structurelle de la courroie (120).

6. Procédé selon l'une des revendications précédentes, dans lequel l'intervalle de temps ($\Delta t$) est déterminé (206) lorsque le moteur à combustion interne (110) est démarré au moyen du générateur de démarrage (130) entraîné par une courroie.

7. Procédé selon l'une quelconque des revendications précédentes, dans lequel une pluralité d'intervalles de temps ($\Delta t$) est déterminée (207), dans lequel la pluralité d'intervalles de temps ($\Delta t$) est évaluée statistiquement (208) et comparée à la valeur de référence.

8. Procédé selon la revendication 7, dans lequel, au cours de l'évaluation statistique (208), une valeur moyenne statistique est déterminée à partir de la pluralité d'intervalles de temps ($\Delta t$) et/ou une analyse des séries chronologiques est effectuée.

9. Procédé selon l'une des revendications précédentes, dans lequel une première marque temporelle est déterminée ou reçue (203) au début du mouvement de rotation du générateur de démarreur (130) entraîné par courroie, dans lequel une deuxième marque temporelle est déterminée (205) ou reçue au début du mouvement de rotation du moteur à combustion interne (110), et dans lequel l'intervalle de temps ($\Delta t$) est déterminé (206) à partir de la première marque temporelle et de la deuxième marque temporelle.

10. Procédé selon l'une des revendications précédentes, dans lequel une entrée de défaut est créée dans une mémoire de défaut et/ou une notification visuelle et/ou sonore est émise lorsque le modification structurelle de la courroie est détectée (209).

11. Unité de calcul (115) configurée pour exécuter un procédé selon l'une quelconque des revendications précédentes dans un moteur à combustion interne (110) équipé d'un générateur de démarreur (130) entraîné par courroie, dans lequel l'unité de calcul est configurée pour déterminer l'intervalle de temps défini dans la revendication 1 et pour contrôler le couple du générateur de démarreur entraîné par courroie et/ou le couple du composant relié à la courroie.

12. Programme d'ordinateur qui fait en sorte qu'une unité de calcul (115) selon la revendication 11 exécute un procédé selon l'une quelconque des revendications 1 à 10 lorsqu'il est exécuté sur l'unité de calcul (115).

13. Support de stockage lisible par machine sur lequel est stocké un programme d'ordinateur selon la revendication 12.

**Fig. 1**

Fig. 2b

Fig. 2a

209

208

206

205

204

203

202

201

207

**Fig. 3**

Fig. 4

Fig. 5a

Fig. 5b

Fig. 5c

**IN DER BESCHREIBUNG AUFGEFÜHRTE DOKUMENTE**

**In der Beschreibung aufgeführte Patentdokumente**

- DE 10112568 A1
- WO 2007000449 A1
- FR 2848631 A1
- US 2013131899 A1
- JP 2004162593 A
- FR 2996618 A1
- FR 2961573 A1
- FR 2839119 A1
- DE 102015208349 A1